# EUROPÄISCHE PATENTSCHRIFT

(11) **EP 3 045 729 B1**
(45) Veröffentlichungstag und Bekanntmachung des Hinweises auf die Patenterteilung: **14.08.2019**
(21) Anmeldenummer: 15198482.0
(22) Anmeldetag: 08.12.2015
(51) Int. Cl.: F04D 13/08, F04D 15/00, F04D 29/041, F04D 29/046, H02K 5/136, H02K 5/173

(54) **LAGERANORDNUNG FÜR EINE TAUCHMOTORPUMPE**
BEARING ASSEMBLY FOR A SUBMERSIBLE MOTOR-DRIVEN PUMP
ASSEMBLAGE DE PALIER POUR UNE POMPE SUBMERSIBLE A MOTEUR ELECTRIQUE

(30) Priorität: 13.01.2015 EP 15151015
(43) Veröffentlichungstag der Anmeldung: 20.07.2016
(73) Patentinhaber: Sulzer Management AG, 8401 Winterthur (CH)
(72) Erfinder: Becker, Klaus, 51469 Bergisch Gladbach (DE)
(74) Vertreter: Intellectual Property Services GmbH

(56) Entgegenhaltungen:
- EP-A1- 2 381 119
- DD-A1- 102 778
- DE-A1- 19 546 023
- DE-A1-102012 202 267
- US-A- 6 102 574

## Beschreibung

Die Erfindung betrifft eine Lageranordnung für eine Tauchmotorpumpe gemäss Anspruch 1 und eine Tauchmotorpumpe umfassend eine Lageranordnung.

Bekannte Tauchmotorpumpen besitzen eine große Anzahl von Präzisionsbauteilen, die eine präzise Ausrichtung, Montage und Wechselwirkung untereinander erfordern. Derartig bekannten Tauchmotorpumpen umfassen ein Pumpengehäuse, einen Motorteil mit einem in einem Motorgehäuse angeordneten Elektromotor und einem Hydraulikteil mit einem Pumpenrad sowie einer zwischen Motorteil und Hydraulikteil angeordneten Wellendurchführung, die von einer Rotorwelle durchsetzt ist.

Die Tauchmotorpumpe pumpt ein Pumpfluid, beispielsweise eine Wasser oder Abwasser, wobei in Abhängigkeit von der Verwendung der Tauchmotorpumpe, beispielsweise bei Gärprozessen ein Gas entstehen kann, insbesondere ein brennbares Gas, das sich um die Tauchmotorpumpe verteilen kann. Bei Betriebsstörungen kann es zu Überhitzungen kommen und es können Zündquellen, beispielsweise durch Funkenbildung bei einem Kurzschluß, in der Pumpe entstehen. Diese Funken können, wenn sie aus der Pumpe austreten, das Gas entzünden und das Bauwerk in dem die Pump eingebaut ist, wie auch die Tauchmotorpumpe, beispielsweise aufgrund einer Explosion, beschädigen oder zerstören. Somit können Tauchpumpen in Umgebungen mit entzündlicher Atmosphäre aus Sicherheitsgründen nur mit besonderen Schutzvorkehrungen betrieben werden.

In der EP 2 249 042 A1 ist eine Tauchmotorpumpe beschrieben, die ein Tragerohr zumindest teilweise mit einem isolierenden umlaufenden Schutzmantel umgibt, sodass ein Teilbereich des Tragerohrs thermisch und stofflich von der Umgebung, insbesondere von dem Pumpfluid und Gas, isoliert ist. Ein solcher Schutzmantel kann insbesondere im Bereich einer Lageranordnung vorgesehen sein, so dass eine direkte Isolierung des besonders gefährdungsintensiven Lagerbereichs gegeben ist. Andere Massnahmen sehen die Ausbildung eines Spaltes in der Lageranordnung vor, beispielsweise zwischen einem Lagerflansch und einem Lagerdeckel.

Nachteil dieser Vorrichtung ist, dass diese konstruktiv sehr aufwendig und kostenintensiv in der Herstellung ist, da zusätzliche Bauteile konstruiert und hergestellt werden müssen, die die Lageranordnung unnötig kompliziert machen. Ausserdem wird mehr Einbauraum in der Tauchmotorpumpe benötigt.

Andere Massnahmen sehen eine Ausbildung eines Spalts zwischen Lagerdeckel und Lagerflansch vor, was eine andere konstruktive Ausgestaltung des Lagerdeckels und / oder Lageflansches nötig macht, die unnötig aufwendig und kompliziert ist. Dadurch kann die Zentrierung des Lagerdeckels unnötig kompliziert, da diese beispielsweise am Lagerflansch erfolgt, wobei zu den Lagerelementen, insbesondere dem Lagerelement direkt am Lagerflansch und / oder Lagerdeckel, ein Abstand vorhanden sein muss, um Konzentritätsfehler auszugleichen. Ausserdem kann es aufgrund der konstruktiv komplizierten Ausführung des Lagerdeckels beispielsweise auch nötig sein ein Lagerelement, insbesondere das Lagerelement, das direkt am Lagerflansch und / oder Lagerdeckel angeordnet ist, von der Grössenordnung her anders auszugestalten und / oder zusätzlich am Lagerdeckel und / oder Lagerflansch, beispielsweise mittels eines Halteelements, zu befestigen.

Von Nachteil ist, dass es aufgrund der Konzentritätsfehler zu einer erhöhten Belastung des Lagerelements und damit zu Verschleiss kommt. Ausserdem ist beispielsweise ein zusätzliches Haltemittel am Lagerdeckel und / oder Lagerflansch vorzusehen, beispielsweise ein O-Ring, um das Lagerelement das direkt am Lagerflansch und / oder Lagerdeckel angeordnet ist, insbesondere einen Lageraussenring dieses Lagerelements, zu halten und festzusetzen.

In der DD 102 778 ist eine Lageranordnung mit einem als Wälzlager ausgebildeten Axiallager gezeigt, dessen äusserer Laufring in radialer Richtung mit Spiel gelagert ist.

Daher ist eine Aufgabe der vorliegenden Erfindung eine Tauchmotorpumpe und eine Lageranordnung vorzuschlagen, die konstruktiv einfach ausgestaltet und kostengünstig herzustellen ist, insbesondere die vorgenannten Nachteile vermeidet.

Diese Aufgabe wird durch eine Lageranordnung mit den Merkmalen des Anspruchs 1 und eine Tauchmotorpumpe mit den Merkmalen des Anspruchs 7 gelöst.

Die abhängigen Ansprüche beziehen sich auf besonders vorteilhafte Ausführungsformen der Erfindung.

Erfindungsgemäss wird eine Tauchmotorpumpe umfassend eine Lageranordnung mit einem Lagerdeckel und einem Lagerflansch und einem oder mehreren Lagerelementen, mit jeweils einem Lagerinnenring, einem Lageraussenring und einem Wälzelement. Die Tauchmotorpumpe umfasst weiter eine Rotorwelle, die im Lagerelement um eine in eine axiale Längsrichtung verlaufende Drehachse A derart drehbar gelagert ist, dass der Lagerinnenring im Betriebszustand mit der Rotorwelle mitrotiert. Dabei ist das Lagerelement so am Lagerflansch angeordnet, dass der Lagerdeckel jeden Lageraussenring in axiale Längsrichtung verspannt, und in radiale Richtung ein umlaufender Spalt mit einer vorgebbaren axialen Breite zwischen dem Lageraussenring und dem Lagerdeckel, und dem Lageraussenring und dem Lagerflansch ausgebildet ist, wobei der Spalt als eine Funkenstrecke zum Explosionsschutz ausgebildet ist, und wobei eine radiale Breite des in radiale Richtung umlaufenden Spalts kleiner oder gleich 0,2 mm ist..

Die Tauchmotorpumpe kann, wie bereits erwähnt, ein Pumpengehäuse mit einem darin angeordneten Pumpenrad umfassen sowie ein auf das Pumpengehäuse aufgesetztes Motorgehäuse mit einem darin angeordneten Elektromotor, der über eine Rotorwelle das Pumpenrad antreibt, umfassen. Das Motorgehäuse mit dem darin angeordneten Elektromotor sowie die sonstigen zum Betrieb des Elektromotors erforderlichen Einrichtungen können der Einfachheit halber als Motorteil bezeichnet werden. Das Pumpengehäuse sowie das Pumpenrad können als Hydraulikteil bezeichnet werden. Die Tauchmotorpumpe kann in einem Leistungsbereich bis ca. 1MW und beispielsweise bei einem Druck bis 10 bar betrieben werden. Ausserdem kann die Tauchmotorpumpe in industriellen Anwendungen, beispielsweise der Förderung von Industriebabwässern oder als Prozesspumpe, verwendet werden. Unter einer Tauchmotorpumpe ist eine Pumpe zu verstehen, die derart ausgestaltet ist, dass diese, wenn die Tauchmotorpumpe teilweise oder vollständig in einer Flüssigkeit, beispielsweise Wasser, angeordnet ist, sicher und dauerhaft betrieben werden kann. Die Tauchmotorpumpe kann also im Betriebszustand für einen bestimmten Zeitraum oder auch dauerhaft teilweise oder vollständig geflutet sein, also in einer Flüssigkeit angeordnet sein, wobei gleichzeitig ein sicherer Betrieb der Pumpe möglich ist. Die Tauchmotorpumpe kann aber auch betrieben werde, wenn diese nicht geflutet ist, also nicht in einer Flüssigkeit angeordnet ist.

Zwischen dem Motorteil und dem Hydraulikteil der Tauchmotorpumpe kann die Wellendurchführung angeordnet sein, insbesondere kann die Wellendurchführung durch den Lagerdeckel ausgebildet sein und die Lageranordnung von der Rotorwelle durchsetzt sein. Genau gesagt ist die Rotorwelle im einen oder mehreren Lagerelementen um die in die axiale Längsrichtung verlaufende Drehachse A derart drehbar gelagert, sodass der Lagerinnenring im Betriebszustand mit der Rotorwelle mitrotiert.

Die Lageranordnung umfasst den Lagerdeckel und das Lagerflansch, wobei der Lagerdeckel am Lagerflansch befestigbar ist, beispielsweise mittels einer oder mehrere Schrauben verschraubt werden kann. Am Lagerflansch können eines oder mehreren Lagerelemente angeordnet sein. Eines oder mehrere Lagerelement umfassen dabei jeweils einen Lagerinnenring, einen Lageraussenring und ein Wälzelement. Dazu kann am Lagerflansch eine Lagerkammer, beispielsweise eine Ausnehmung, bevorzugt eine zylindrische Bohrung, vorhanden sein, in welcher eines oder mehrere Lagerelemente angeordnet sein können, insbesondere passgenau angeordnet sein können. Mehrere Lagerelemente können auch hintereinander, also in axiale Längsrichtung, am Lagerflansch angeordnet sein. Dabei können einer oder mehrere Lagerinnenringe und einer oder mehrere Lageraussenringe axial in einer Reihe angeordnet sein. In einem Bereich zwischen den jeweiligen Lagerinnen- und Lageraussenringen können die Walzelemente angeordnet sein. Die Lagerkammer und / oder die Lagerelemente können zur Schmierung und / oder Kühlung der Lagerelemente mit einem Schmiermittel und / oder Kühlmittel befüllt sein, insbesondere können das Schmier- und / oder Kühlmittel in den Bereich zwischen Lagerinnen- und Lageraussenring strömen und so die Wälzelemente schmieren und kühlen. Am Lagerflansch, insbesondere in der Lagerkammer, können aber auch weitere Lagereinheiten, beispielsweise eine Lagerhülse angeordnet sein.

Eines oder mehrere Lagerelemente sind so am Lagerflansch angeordnet, dass der Lagerdeckel jeden Lageraussenring in axiale Längsrichtung verspannt. Dazu übt der Lagerdeckel in axiale Längsrichtung eine Haltekraft auf den Lageraussenring aus, insbesondere auf eine Stirnseite des Lageraussenrings, während der Lageraussenring gleichzeitig am Lagerflansch gehalten wird bzw. vom Lagerflansch eine der Haltekraft gleichgrosse entgegenwirkende Druckkraft wirkt, sodass der Lagerdeckel den Lageraussenring des Lagerelements in axiale Längsrichtung verspannt. Unter der Stirnseite kann dabei die Fläche verstanden werden, die in Richtung des Lagerdeckels orientiert sein kann. Ebenso kann aber am Lageraussenring eine weitere Stirnseite vorgesehen sein, wobei unter der weiteren Stirnseite die Fläche verstanden werden kann, die in Richtung des Lagerflanschs orientiert sein kann. Am Lagerdeckel kann dann eine Auflagefläche und am Lagerflansch eine weitere Auflagefläche vorgesehen sein, wobei die Stirnseite auf der Auflagefläche und die weitere Stirnseite auf der weiteren Auflagefläche aufliegt. Die Auflageflächen können beispielsweise als eine Stufe ausgebildet sein.

Es können aber auch mehrere Lagerelemente nebeneinander am Lagerflansch angeordnet sein, sodass mehrere Lageraussenringe axial in einer Reihe angeordnet sein können. Dabei kann der Lagerdeckel wie beschrieben auf einen ersten Lageraussenring eines ersten Lagerelements, das direkt am Lagerdeckel angeordnet ist, eine Haltekraft in axiale Längsrichtung ausüben und der erste Lageraussenring die Haltekraft auf einen zweiten Lageraussenring eines zweiten benachbarten Lagerelements übertragen, während der zweite Lageraussenring gleichzeitig am Lagerflansch gehalten wird bzw. vom Lagerflansch eine der Haltekraft gleichgrosse entgegenwirkende Druckkraft wirkt, sodass der Lagerdeckel den ersten und zweiten Lageraussenring in axiale Längsrichtung verspannt.

Vorteilhafterweise kann sich so der Lagerdeckel auf den Lageraussenring stützen, der direkt am Lagerdeckel angeordnet ist, und der Lagerdeckel kann am Lageraussenring des Lagerelements zentriert werden. Insbesondere kann bei mehreren Lagerelementen der Lagerdeckel am Lageraussenring des direkt am Lagerdeckel angeordneten Lagerelement zentriert werden, wodurch der Lagerdeckel und / oder die Rotorwelle besser zentriert sind und alle Lageraussenringe vollständig in axiale Längsrichtung verspannt sind und somit besser gelagert sind. Ausserdem kann der Lagerdeckel somit konstruktiv einfacher ausgestaltet und kostengünstig hergestellt werden, da beispielsweise nur eine Innenbearbeitung des Lagerdeckels notwendig ist. Zusätzlich kann das Lagerelement, insbesondere das Lagerelement, das direkt am Lagerdeckel oder Lagerflansch angeordnet ist, die gleiche Grösse wie alle anderen Lagerelemente aufweisen und / oder auf ein zusätzliches Halteelement am Lagerdeckel und / oder Lageflansch verzichtet werden, das das Lagerelement hält. Somit ist die Tauchmotorpumpe insgesamt konstruktiv einfacher ausgestaltet und kostengünstiger herzustellen und vermeidet die aus dem Stand der Technik bekannten Nachteile.

Im Weiteren ist in radiale Richtung ein umlaufender Spalt mit einer vorgebbaren axialen Breite zwischen dem Lageraussenring und dem Lagerdeckel und dem Lageraussenring und dem Lagerflansch ausgebildet. Unter einem Spalt mit einer vorgebbaren axialen Breit kann die Ausdehnung des Spalts in axiale Längsrichtung, also eine Länge des Spalts in axiale Längsrichtung verstanden werden. Dadurch, dass der Spalt zwischen dem Lageraussenring und dem Lagerdeckel und dem Lageraussenring und dem Lagerflansch ausgebildet ist, und nicht wie bisher zwischen Teilen des Lagergehäuses, kann die Lageranordnung nochmals konstruktiv vereinfacht werden, da auf eine aufwendige Bearbeitung des Lagergehäuses verzichtet werden kann. Ausserdem ermöglicht der kostengünstig herzustellende Spalt zusätzlich einen sicheren Einsatz der Tauchmotorpumpe auch in Umgebungen mit entzündlicher Atmosphäre, da dieser auch als eine Funkenstrecke verwendet werden kann.

In Ausgestaltung der Erfindung ist der Spalt als eine Funkenstrecke zum Explosionsschutz ausgebildet. Ausserdem kann zusätzlich in radiale Richtung ein weiterer umlaufender Spalt mit einer vorgebbaren axialen Breite zwischen dem Lagerdeckel und der Rotorwelle ausgebildet sein. Von Vorteil kann somit ein Lichtbogen oder ein Funke in der Tauchmotorpumpe, insbesondere in der Wellendurchführung, eigensicher auf einen sicherheitlich unbedenklichen Bereich, den Spalt und / oder den weiteren Spalt, begrenzt werden.

In Ausgestaltung der Erfindung ist die vorgebbaren axiale Breite des in radiale Richtung umlaufenden Spalts und / oder des weiteren umlaufenden Spalts ≥ 5 mm. Eine radiale Breite des in radiale Richtung umlaufenden Spalts und / oder des weiteren umlaufenden Spalts ≤ 0,2 mm ist.

Vorteil der beschriebenen Massnahmen und Ausgestaltungen ist, dass der aus dem Stand der Technik bekannte Nachteil, nämlich das Spalte nur durch Gussteile ausgebildet werden, wird somit vermieden und der Spalt und der weitere Spalt werden vorteilhafterweise mittels eines oder mehrerer Lagerelemente, insbesondere mittels einem oder mehreren Lageraussenringen ausgebildet. Somit kann der Spalt einfach und kostengünstig hergestellt werden, da das aufwendige Bearbeiten der Gussteile, insbesondere des Lagerdeckels, entfällt.

In Ausgestaltung der Erfindung ist das Lagerelement ein Wälzlager, insbesondere ein Kugellager oder Zylinderrollenlager.

Die Erfindung betrifft im Weiteren eine Lageranordnung für eine Tauchmotorpumpe. Die Lageranordnung umfasst einen Lagerdeckel und einen Lagerflansch und eines oder mehrere Lagerelemente mit jeweils einem Lagerinnenring, einem Lageraussenring und einem Wälzelement. Dabei ist das Lagerelement so am Lagerflansch angeordnet, dass der Lagerdeckel jeden Lageraussenring in axiale Längsrichtung verspannt, und in radiale Richtung ein umlaufender Spalt mit einer vorgebbaren axialen Breite zwischen dem Lageraussenring und dem Lagerdeckel und dem Lageraussenring und dem Lagerflansch ausgebildet ist wobei der Spalt als eine Funkenstrecke zum Explosionsschutz ausgebildet ist, und wobei eine radiale Breite des in radiale Richtung umlaufenden Spalts kleiner oder gleich 0,2 mm ist.

In Ausgestaltung der Erfindung ist der Spalt als eine Funkenstrecke zum Explosionsschutz ausgebildet ist. Als weitere Massnahme ist vorgesehen, dass das Lagerelement ein Wälzlager, insbesondere ein Kugellager oder Zylinderrollenlager ist. Die Lageranordnung kann in der beschriebenen Tauchmotorpumpe angeordnet sein.

In Ausgestaltung der Erfindung ist die vorgebbaren axiale Breite des in radiale Richtung umlaufenden Spalts ≥ 5 mm und eine radiale Breite des in radiale Richtung umlaufenden Spalts ≤ 0,2 mm ist.

In Ausgestaltung der Erfindung ist im Betriebszustand in radiale Richtung ein weiterer umlaufender Spalt mit einer vorgebbaren axialen Breite zwischen dem Lagerdeckel und einer Rotorwelle ausbildbar. Die vorgebbaren axiale Breite des in radiale Richtung weiteren umlaufenden Spalts ist ≥ 5 mm und / oder die radiale Breite des in radiale Richtung weiteren umlaufenden Spalts ist ≤ 0,2 mm.

Wie bereits erwähnt sind die Vorteile der erfindungsgemässen Tauchmotorpumpe und der erfindungsgemässen Lageranordnung, dass der Lagerdeckel am Lageraussenring des Lagerelements zentriert werden bzw. bei mehreren Lagerelementen der Lagerdeckel am Lageraussenring des direkt am Lagerdeckel angeordneten Lagerelement zentriert werden kann. Dadurch ist der Lagerdeckel besser zentriert und alle Lageraussenringe sind vollständig in axiale Längsrichtung verspannt. Somit können die Tauchmotorpumpe und die Lageranordnung, insbesondere der Lagerdeckel einfacher ausgestaltet, insbesondere konstruktiv einfacher ausgestaltet, und kostengünstig hergestellt werden. Ausserdem ermöglichen der Spalt und der weitere Spalt den Betrieb einer Tauchmotorpumpe und einer Lageranordnung in einer Umgebung die einen Explosionsschutz erfordert. Der Explosionsschutz ist erforderlich, wenn es zu einer Fehlfunktion der Tauchmotorpumpe kommt, z. B. ein elektrischer Kurzschluß, und der damit gegeben Möglichkeit, die Explosion eines zündfähigen Gemisches auszulösen. Ist beispielsweise ein explosionsfähiges Gemisch in der Tauchmotorpumpe, welches durch den Kurzschluß entzündet wird, ist zwar die Ausbreitung der Explosion innerhalb des Motors möglich, aber der oder die Spalte verhindern, dass der Funke aus dem Motor austritt, beispielsweise in ein Bauwerk, wo eine explosionsfähige Atmosphäre vorliegen kann, die dann entzündet werden könnte.

Im Folgenden wird die Erfindung in apparativer Hinsicht anhand eines Ausführungsbeispiels unter Bezugnahme auf die Zeichnung näher erläutert. In der schematischen Zeichnung zeigt:
- Fig. 1: ein erstes Ausführungsbeispiel einer erfindungsgemässen Tauchmotorpumpe;
- Fig. 2: ein erstes Ausführungsbeispiel einer erfindungsgemässen Lageranordnung.

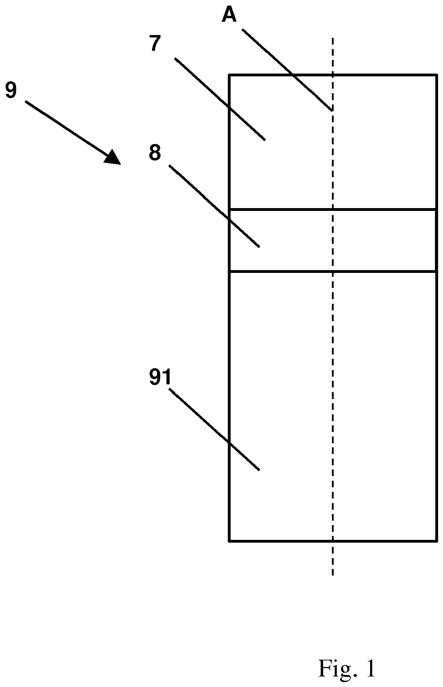

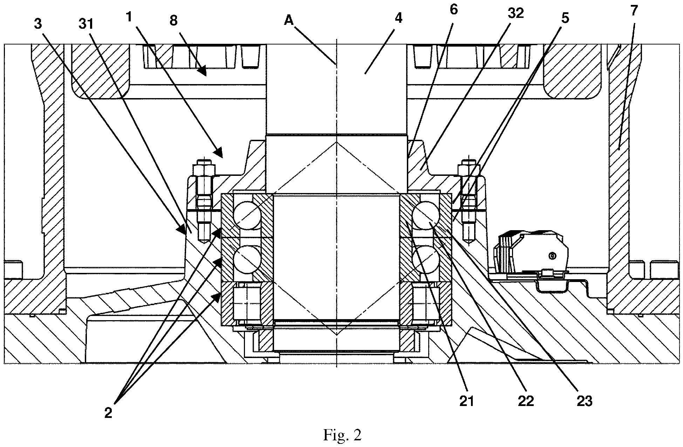

Fig. 1 zeigt schematische Darstellung eines ersten Ausführungsbeispiels einer erfindungsgemässen Tauchmotorpumpe 9. Die Tauchmotorpumpe 9 umfasst ein Pumpengehäuse 91 mit einem darin angeordneten Impeller (nicht dargestellt), ein auf das Pumpengehäuse 91 aufgesetztes Motorgehäuse 7 mit einem darin angeordneten Elektromotor (nicht dargestellt) der über eine Rotorwelle (nicht dargestellt) den Impeller antreibt. Zwischen dem Motorgehäuse 7 und dem Pumpengehäuse 91 der Tauchmotorpumpe 9 ist eine Wellendurchführung 8 angeordnet. Die Wellendurchführung 8 wird von der Rotorwelle durchsetzt, wobei die Wellendurchführung 8 durch den Lagerdeckel (siehe Fig. 2) ausgebildet ist.

Fig. 2 zeigt schematische Darstellung eines ersten Ausführungsbeispiels einer erfindungsgemässen Lageranordnung 1, die in einer erfindungsgemässen Tauchmotorpumpe 9 angeordnet ist. Die Rotorwelle 4 ist in einem

Lagerelement 2 um die in eine axiale Längsrichtung verlaufende Drehachse A derart drehbar gelagert, wobei ein Lagerinnenring 21 im Betriebszustand mit der Rotorwelle 4 mitrotiert. Die Lageranordnung 1 für eine Tauchmotorpumpe umfasst ein Lagergehäuse 3 mit einem Lagerdeckel 32 und einem Lagerflansch 31 sowie eines oder mehrere Lagerelemente 2 mit jeweils einem Lagerinnenring 21, einem Lageraussenring 23 und einem Wälzelement 22. Das Lagerelement 2 so am Lagerflansch 31 angeordnet ist, dass der Lagerdeckel 32 jeden Lageraussenring 23 in axiale Längsrichtung verspannt und in radiale Richtung ein umlaufender Spalt 5 mit einer vorgebbaren axialen Breite zwischen dem Lageraussenring 23 und dem Lagerdeckel 32 und dem Lageraussenring 23 und dem Lagerflansch 31 ausgebildet ist.

Der Spalt 5 ist insbesondere als eine Funkenstrecke zum Explosionsschutz ausgebildet, also als eine Stecke, in der ein Funke, der beispielsweise ein explosionsfähiges Gemisch entzünden könnte, erlöschen kann, ohne aus dem Motor auszutreten. Das Lagerelement 2 ist ein Wälzlager, insbesondere ein Kugellager oder Zylinderrollenlager ist. Fig. 1 zeigt in axiale Längsrichtung zwei Kugellager und ein Zylinderlager.

In radiale Richtung ist ausserdem ein weiterer umlaufender Spalt 6 mit einer vorgebbaren axialen Breite zwischen dem Lagerdeckel 32 und der Rotorwelle 4 ausgebildet. Die Lageranordnung 1 kann zur Schmierung und / oder Kühlung mit einer Schmier- und Kühlflüssigkeit befüllt sein.

## Patentansprüche

1. Lageranordnung (1) für eine Tauchmotorpumpe, umfassend
- einen Lagerdeckel (32) und ein Lagerflansch (31),
- eines oder mehrere Lagerelemente (2) mit jeweils einem Lagerinnenring (21), einem Lageraussenring (23) und einem Wälzelement (22),
wobei das Lagerelement (2) so am Lagerflansch (31) angeordnet ist, dass der Lagerdeckel (32) jeden Lageraussenring (23) in axiale Längsrichtung verspannt,
**dadurch gekennzeichnet, dass**
in radiale Richtung ein umlaufender Spalt (5) mit einer vorgebbaren axialen Breite zwischen dem Lageraussenring (23) und dem Lagerdeckel (32), und zwischen dem Lageraussenring (23) und dem Lagerflansch (31) ausgebildet ist, wobei der Spalt (5) als eine Funkenstrecke zum Explosionsschutz ausgebildet ist, und wobei eine radiale Breite des in radiale Richtung umlaufenden Spalts (5) kleiner oder gleich 0,2 mm ist.

2. Lageranordnung nach Anspruch 1, wobei das Lagerelement (2) ein Wälzlager, insbesondere ein Kugellager oder Zylinderrollenlager ist.

3. Lageranordnung nach Anspruch 1 oder 2, wobei die vorgebbaren axiale Breite des in radiale Richtung umlaufenden Spalts (5) grösser oder gleich 5 mm ist.

4. Lageranordnung nach einem der Ansprüche 1 bis 3, wobei im Betriebszustand in radiale Richtung ein weiterer umlaufender Spalt (6) mit einer vorgebbaren axialen Breite zwischen dem Lagerdeckel (32) und einer Rotorwelle (4) ausbildbar ist.

5. Lageranordnung nach Anspruch 4, wobei die vorgebbaren axiale Breite des in radiale Richtung umlaufenden Spalts (5) und / oder des in radiale Richtung weiteren umlaufenden Spalts (6) grösser oder gleich 5 mm ist.

6. Lageranordnung nach Anspruch 4 oder 5, wobei eine radiale Breite des in radiale Richtung weiteren umlaufenden Spalts (6) kleiner oder gleich 0,2 mm ist.

7. Tauchmotorpumpe umfassend eine Lageranordnung (1) nach einem der Ansprüche 1 bis 6.

## Claims

1. A bearing arrangement (1) for a submersible pump in accordance with any one of the claims 1 to 6, comprising
- a bearing cover (32) and a bearing flange (31);
- one or more bearing elements (2) each having an inner bearing ring (21), an outer bearing ring (23), and a roller element (22),
wherein the bearing element (2) is arranged at the bearing flange (31) such that the bearing cover (32) tensions each outer bearing ring (23) in a longitudinal axial direction
**characterized in that**
a peripheral gap (5) having a predefinable axial width is formed in a radial direction between the outer bearing ring (23) and the bearing cover (32), and between the outer bearing ring (23) and the bearing flange (31),
wherein the gap (5) is formed as a spark gap for explosion protection, and wherein a radial width of the gap (5) running around in the radial direction is smaller than or equal to 0.2 mm.

2. A bearing arrangement in accordance with claim 1, wherein the bearing element (2) is a roller element bearing, in particular a ball bearing or a cylinder roller bearing.

3. A bearing arrangement in accordance with any one of the claims 1 or 2,
wherein the predefinable axial width of the gap (5) running around in the radial direction is larger than or equal to 5 mm

4. A bearing arrangement in accordance with any one of the claims 1 to 3,
wherein a further peripheral gap (6) having a predefinable axial width can be formed in the radial direction between the bearing cover (32) and a rotor shaft (4) in the operating state.

5. A bearing arrangement in accordance with claim 4, the predefinable axial width of the gap (5) running around in the radial direction and/or of the further peripheral gap (6) is larger than or equal to 5 mm.

6. A bearing arrangement in accordance with any one of the claims 4 or 5,
wherein a radial width of the gap (6) running around in the radial direction is smaller than or equal to 0.2 mm.

7. A submersible pump comprising a bearing arrangement (1) according to any of the claims 1 to 6.

## Revendications

1. Un agencement de palier (1) pour une pompe submersible comprenant
- un couvercle de palier (32) et une bride de palier (31),
- un ou plusieurs éléments de palier (2) comportant chacun une bague intérieure de palier (21), une bague extérieure de palier (23) et un élément roulant (22),
dans lequel l'élément de palier (2) est disposé sur la bride de palier (31) de telle sorte que le couvercle de palier (32) serre chaque bague extérieure de palier (23) dans la direction longitudinale axiale,
**caractérisé en ce que**
une fente circonférentielle (5) avec une largeur axiale prédéterminable est formé entre la bague extérieure de palier (23) et le couvercle de palier (32), et entre la bague extérieure de palier (23) et la bride de palier (31) dans la direction radiale, dans lequel la fente (5) est conçue comme éclateur pour la protection contre les explosions, et dans lequel une largeur radiale de la fente (5) circulant dans la direction radiale est inférieure ou égale à 0,2 mm.

2. Un agencement de palier selon la revendication 1, dans lequel l'élément de palier (2) est un palier à rouleau, en particulier un pallier à billes ou un palier à rouleaux cylindriques.

3. Un agencement de palier selon la revendication 1 ou 2, dans lequel la largeur axiale prédéterminable de la fente (5) circulant dans la direction radiale est supérieure ou égale à 5 mm.

4. Un agencement de palier selon la revendication 1 à 3, dans lequel, à l'état de fonctionnement, une autre fente circonférentielle (6) avec une largeur axiale prédéterminable peut être formé entre le couvercle de palier (32) et un arbre de rotor (4) dans la direction radiale.

5. Un agencement de palier selon la revendication 4, dans lequel la largeur axiale prédéterminable de la fente (5) circulant dans la direction radiale et / ou de l'autre fente (6) circulant dans la direction radiale est supérieure ou égale à 5 mm.

6. Un agencement de palier selon la revendication 4 ou 5, dans lequel une largeur radiale de l'autre fente (6) circulant dans la direction radiale est inférieure ou égale à 0,2 mm.

7. Un pompe submersible comprenant un agencement de palier (1) selon l'une des revendications 1 à 6.
